# EUROPÄISCHE PATENTSCHRIFT

(11) **EP 1 571 950 B1**
(45) Veröffentlichungstag und Bekanntmachung des Hinweises auf die Patenterteilung: **19.09.2007**
(21) Anmeldenummer: 03775254.0
(22) Anmeldetag: 30.10.2003
(51) Int. Cl.: A47J 31/04, A47J 31/56

(54) **GERÄT ZUR ZUBEREITUNG HEISSER GETRÄNKE**
DEVICE FOR PREPARING HOT BEVERAGES
APPAREIL POUR PREPARER DES BOISSONS CHAUDES

(30) Priorität: 19.12.2002 DE 10260039
(43) Veröffentlichungstag der Anmeldung: 14.09.2005
(73) Patentinhaber: Braun GmbH, 61476 Kronberg (DE)
(72) Erfinder: FONT, Vicenc, E-08013 Barcelona (ES); CORONADO, Juan, Carlos, E-08042 Barcelona (ES); MARTINEZ, Candelario, E-08860 Castelldefels (Barcelona) (ES); ROMAN, José, Luis, E-08960 Sant Just Desvern (ES); REBORDOSA, Antonio, E-08272 Sant Fruitós de Bages (ES)
(86) Internationale Anmeldenummer: PCT/EP2003/012025
(87) Internationale Veröffentlichungsnummer: WO 2004/056245

(56) Entgegenhaltungen:
- EP-A- 0 224 041
- DE-A- 2 625 791
- US-A- 4 944 217

## Beschreibung

Die Erfindung bezieht sich auf ein Gerät zur Zubereitung heißer Getränke gemäß dem Oberbegriff des Anspruchs 1.

Derartige beräte sind bekannt aus dem Dokument US4944217 und arbeiten nach dem sog. Perkulatorprinzip, bei dem durch die Heizeinrichtung Wasser im Steigrohr erhitzt wird und die bei dem Kochvorgang entstehenden Dampfblasen im Steigrohr aufsteigen und das Wasser mit sich reißen, das dann der Aufbrüh- oder Mischeinrichtung zum Aufbrühen von Kaffee oder zum Mischen mit einem pulverförmigen Kaffee-, Milch- oder Fleischbrüheextrakt zugeführt wird.

Der Wasserbehälter steht mit dem Steigrohr nach dem Prinzip der kommunizierenden Röhre in Verbindung, so daß der Wasserstand im Steigrohr von dem jeweiligen Füllstand im Wasserbehälter abhängt. Dies führt dazu, daß sich insbesondere bei hohem Füllstand im Wasserbehälter ein Wasservolumen im Steigrohr oberhalb der Heizeinrichtung befindet, das bei Inbetriebnahme des Geräts nach einem Stillstand nicht oder nur unzureichend erhitzt wird. Damit wird dieses kalte Wasser von den im Bereich der Heizeinrichtung erzeugten Dampfblasen zur Aufbrüh- oder Mischeinrichtung gefördert, was zu einem weitgehend kalten Getränk und im Falle einer Aufbrüheinrichtung auch zu einem zumindest nicht ausreichenden Aufbrühen des Brühgutes führt.

Aufgabe der Erfindung ist es daher ein Gerät der eingangs genannten Art zu schaffen, durch das auch bei einer Inbetriebnahme nach einem Stillstand des Gerätes unmittelbar eine Zufuhr vollständig aufgeheizten Wassers oder Wasserdampfs erfolgt.

Diese Aufgabe wird erfindungsemäß durch die kennzeichnenden Merkmale des Anspruchs 1 gelöst.

Durch diese Ausbildung ist das Volumen des jeweils aufzuheizenden Wassers immer konstant. Damit kann die Heizeinrichtung auf dieses konstante Volumen hin so optimiert ausgelegt werden, daß eine Förderung von Wasser oder Wasserdampf nach dem Thermalpumpenprinzip unter immer weitgehend gleichen Bedingungen erst dann einsetzt, wenn das im Steigrohr enthaltene Wasser vollständig auf eine Temperatur von z.B. etwa 90° C aufgeheizt ist. Dies stellt sicher, daß ein pulverförmiger Extrakt von z.B. Kaffee, Milch oder Fleischbrühe optimal aufgelöst und heiß trinkbereit aufbereitet wird. Zum Aufbrühen von z.B. Filterkaffee stellt die unmittelbare Förderung von hoch aufgeheiztem Wasser einen optimalen Brühvorgang sicher.

Die Ausbildung mit durch eine Heizeinrichtung aufgeheiztem Steigrohr ermöglicht ein Steigrohr geringen Querschnitts und damit geringer Volumenaufnahme, so daß nach Art eines Durchlauferhitzers bereits nach kurzer Zeit und mit geringem Energiebedarf heißes Wasser oder Wasserdampf geliefert wird.

Zur optimalen Volumenausnutzung und Vermeidung von restlichem, nicht optimal aufgeheiztem Wasser, kann eine der bestimmten Wasserspiegelhöhen nahe dem Auslaß des Steigrohres sein.

Eine besonders einfach aufgebaute Einrichtung besteht darin, daß die Niveaukonstanthalteeinrichtung einen mit dem Steigrohr verbundenen, zur Atmosphäre offenen Behälter besitzt, in den der Behälterauslaß des geschlossenen Wasserbehälters auf einem der bestimmten Wasserspiegelhöhe entsprechenden Niveau senkrecht nach unten mündet.

Damit wird nach dem Prinzip einer Vogeltränke selbsttätig und kontinuierlich aus dem Wasserbehälter die Wassermenge in den Behälter und von dort zum Steigrohr nachgeführt, die von dem Steigrohr der Aufbrüh- und Mischeinrichtung zugeführt wurde.

Eine andere, ebenfalls einfach aufgebaute Ausbildung besteht darin, daß die Niveaukonstanthalteeinrichtung einen mit dem Steigrohr verbundenen Behälter aufweist, in den der Behälterauslaß mündet, wobei in dem Behälterauslaß ein bei Absenkung des Wasserniveaus im Steigrohr unter die bestimmte Wasserspiegelhöhe öffnendes Auslaßventil angeordnet ist. Auch dabei erfolgt eine selbsttätige und kontinuierliche Nachführung einer Menge von Wasser aus dem Wasserbehälter, die der von dem Steigrohr an die Aufbrüh- oder Mischeinrichtung abgegebenen Menge entspricht.

Dabei ist vorzugsweise das Auslaßventil von einem das Wasserniveau im Behälter erfassenden Sensor steuerbar.

Das Auslaßventil kann ein Schwimmerventil und der Sensor ein Schwimmersensor sein, so daß damit ein besonders einfacher und sicher funktionierender Sensor verwendet werden kann.

Eine ebenfalls auf einfache Weise das vom Steigrohr abgegebene Wasser nachführende Ausbildung wird dadurch erreicht, daß die Niveaukonstanthalteeinrichtung eine Hubeinrichtung aufweist, durch die der Wasserbehälter sein Wasserniveau auf der bestimmten Wasserspiegelhöhe im Steigrohr haltend heb- und senkbar ist.

Dabei kann die Hubeinrichtung aus einfachen Mitteln bestehen, wenn die Hubeinrichtung eine den Wasserbehälter abstützende Feder, insbesondere eine Druckfeder ist, deren Federhub sich umgekehrt proportional zum Wasserstand im Wasserbehälter verhält.

Zu einer kontinuierlichen Nachführung des vom Steigrohr an die Aufbrüh- oder Mischeinrichtung heiß abgegebenen Wassers führt es ebenfalls, wenn die Niveaukonstanthalteeinrichtung einen die Wasserstandshöhe im Steigrohr erfassenden Sensor aufweist, durch den bei einem Wasserstand unter der bestimmten Wasserspiegelhöhe eine in einer Verbindung von dem Wasserbehälter oder einem Behälter angeordnete Pumpe zum Steigrohr fördernd einschaltbar ist.

Die Niveaukonstanthalteeinrichtung weißt erfindungsgemäß einen Zuführbehälter auf, der sowohl mit dem Wasserbehälter oder einem mit dem Wasserbehälter verbundenen Behälter als auch mit dem Steigrohr verbunden ist, einen dem Wasserstand des Steigrohres entsprechender Wasserstand aufweist und bist zu einem der bestimmten Wasserspiegelhöhe entsprechenden Niveau füllbar ist, so wird bei einem nicht schnell genug aus dem Wasserbehälter nachfließenden Wasser das ausreichende Nachführen von Wasser zum Steigrohr sicher gestellt, um das vom Steigrohr abgegebene Wasser sofort nachzuführen und zu kompensieren.

Das der Wasserspiegelhöhe im Steigrohr entsprechenden Niveau im Zuführrohr wird bei größerer Wassernachfuhr vom Wasserbehälter als der vom Steigrohr abgegebenen Wassermenge auf einfach Weise sichergestellt, da der Zuführbehälter erfindungsgemäß auf einem der bestimmten Wasserspiegelhöhe im Steigrohr entsprechenden Niveau einen Überlauf besitzt, so daß das überschüssige Wasser abgeführt, vorzugsweise in den Wasserbehälter zurückgeleitet werden kann.

Eine andere Möglichkeit zum Halten des Niveaus des Wassers im Nachführbehälter auf der Wasserspiegelhöhe im Steigrohr besteht darin, daß der Zuführbehälter auf einem der bestimmten Wasserspiegelhöhe entsprechenden Niveau einen Sensor besitzt, durch den bei einem Wasserstand unter der bestimmten Wasserspiegelhöhe im Steigrohr eine in einer Verbindung von dem Wasserbehälter oder dem Behälter zum Zuführbehälter angeordnete Pumpe zum Zuführbehälter fördernd einschaltbar ist.

Zu einem optimalen Funktionieren des Förderns des Wassers im Steigrohr nach dem Thermalpumpenprinzip erstreckt sich das Steigrohr im Wesentlichen senkrecht ansteigend.

Es kann aber auch sich unter einem Winkel geneigt ansteigend erstrecken.

Zu einer besonders schnellen und vollständigen Aufheizung des Wassers im Steigrohr führt es, wenn die Heizeinrichtung sich weitgehend über die Länge des Steigrohres erstreckt und insbesondere sich zumindest bis nahe an den Auslaß des Steigrohres erstreckt. Die Heizeinrichtung kann zusätzlich auch bereits vor dem Anstieg des Steigrohres beginnend ausgebildet sein.

Die Heizeinrichtung kann ein sich in dem Steigrohr gerade oder gewendelt erstreckender Heizstab sein, wobei die gewendelte Ausbildung zu einer größeren effektiven Heizstablänge bei gleicher Längserstreckung führt.

Die Gasblasenbildung und die Strömung im Steigrohr werden nicht behindert, wenn die Heizeinrichtung ein sich an der Außenwand des Steigrohres gerade oder gewendelt erstreckender Heizstab ist.

Zu einer besonders guten Wärmeübertragung von der Heizeinrichtung auf das Wasser im Steigrohr führt es, wenn die Heizeinrichtung das Steigrohr umschließt.

Eine einfache und schnell aufheizbare Ausbildung wird dadurch erreicht, daß die Heizeinrichtung einen oder mehrere elektrische Heizwiderstände besitzt.

Ist das Steigrohr ganz oder teilweise als Heizeinrichtung ausgebildet, so erfolgt eine direkte und effektive Wärmeübertragung von der Heizeinrichtung auf das Wasser im Steigrohr.

Zur Verbesserung der Qualität des Wassers kann in dem Behälter ein Filter angeordnet sein, der von dem vom Wasserbehälter zum Steigrohr fließenden Wasser durchströmbar ist.

Besitzt das Steigrohr im Bereich der Heizeinrichtung einen vergrößerten Durchflußquerschnitt, so können größere Wassermengen aufgeheizt und gefördert werden.

Um ein Überhitzen der Heizeinrichtung bei nicht ausreichender Wassermenge im Steigrohr zu vermeiden, kann von einem Sensor eine Wasserfüllung des Steigrohres zumindest im Bereich der Heizeinrichtung erfaßbar und bei nicht vorhandener Wasserfüllung ein die Heizeinrichtung abschaltendes Signal erzeugbar sein.

Ist dabei der Sensor etwa im oberen Endbereich der Heizeinrichtung angeordnet, so spricht der Sensor bereits an, wenn der Wasserstand beginnt den Bereich der Heizeinrichtung nicht mehr vollständig zu überdecken.

Der Sensor kann dabei ein Thermostat der Heizeinrichtung sein, durch den die Temperatur der Heizeinrichtung auch geregelt wird.

Zur Sicherung des Thermostaten besitzt dieser vorzugsweise eine Überlastsicherung.

Ausführungsbeispiele der Erfindung sind in der Zeichnung dargestellt und werden im folgenden näher beschrieben. Es zeigen:
- Fig. 1: eine Prinzipdarstellung nicht erfindungsgemäßem Geräts zur Zubereitung heißer Getränke,
- Fig. 2: eine Prinzipdarstellung eines Ausführungsbeispiels eines Geräts zur Zubereitung heißer Getränke,
- Fig. 3: eine Prinzipdarstellung eines zweiten Ausführungsbeispiels eines Geräts zur Zubereitung heißer Getränke,
- Fig. 4: eine Darstellung eines nicht erfindungsgemäßen Behälters mit einem senkrechten Steigrohr,
- Fig. 5: eine Darstellung eines nicht erfindungsgemäßen Behälters mit einem geneigten Steigrohr,
- Fig. 6: eine Darstellung einer nicht erfindungsgemäßen Niveauhalteeinrichtung,
- Fig. 7: eine zweites Ausführungsbeispiel einer nicht erfindungsgemäßen Niveauhalteeinrichtung,
- Fig. 8: eine drittes Ausführungsbeispiel einer nicht erfindungsgemäßen Niveauhalteeinrichtung.

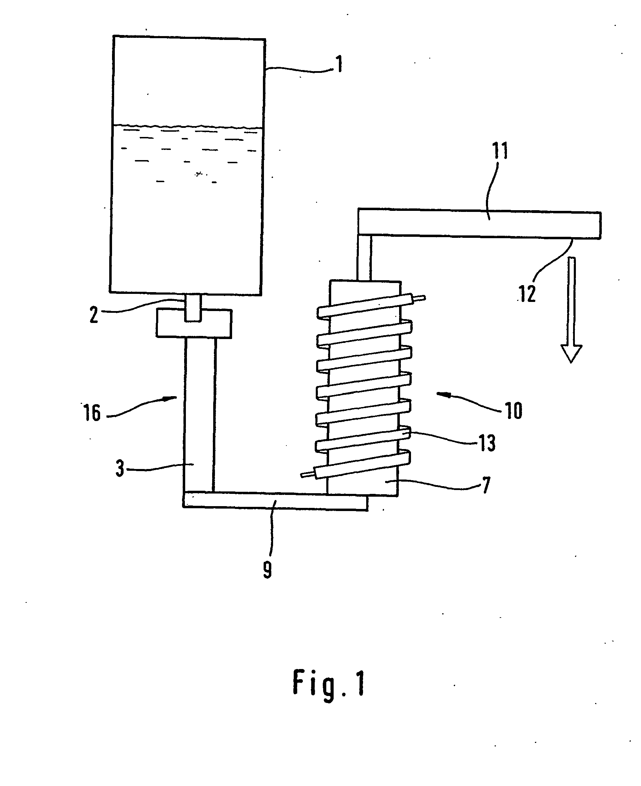

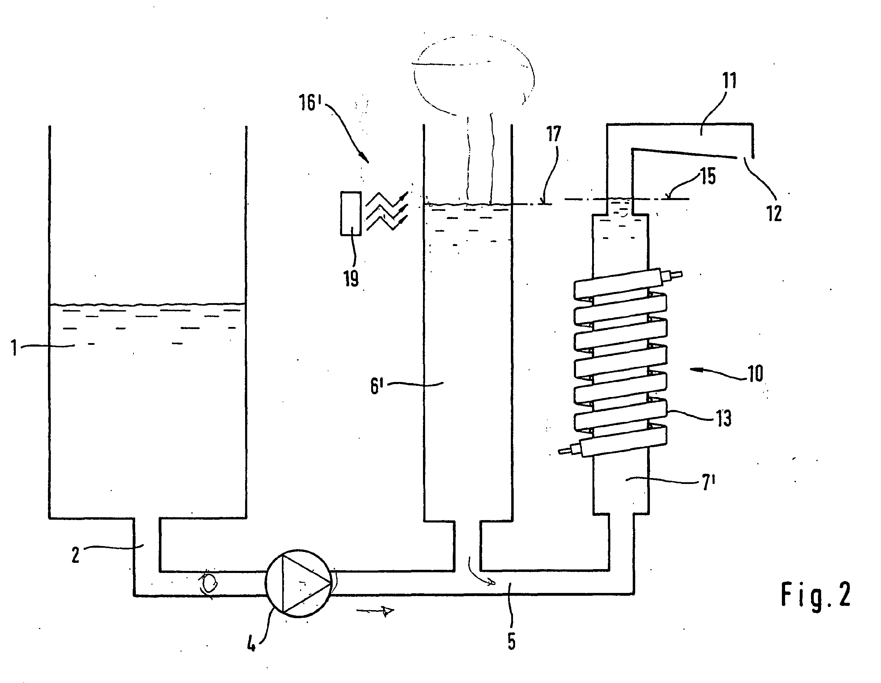

Die in den Figuren dargestellten Geräte zur Zubereitung heißer Getränke besitzen einen Wasserbehälter 1 mit einem Behälterauslaß 2 an der Unterseite. Der Behälterauslaß 2 führt in den Figuren 1 und 3 bis 7 zu einem unter dem Behälterauslaß 2 angeordneten Behälter 3. In Fig. 2 führt der Behälterauslaß 2 zu einer Pumpe 4, von der Wasser aus dem Wasserbehälter 1 über eine Verbindung 5 sowohl zu einem Zuführbehälter 6' als auch zu dem unteren Ende eines Steigrohres 7' gefördert werden kann.

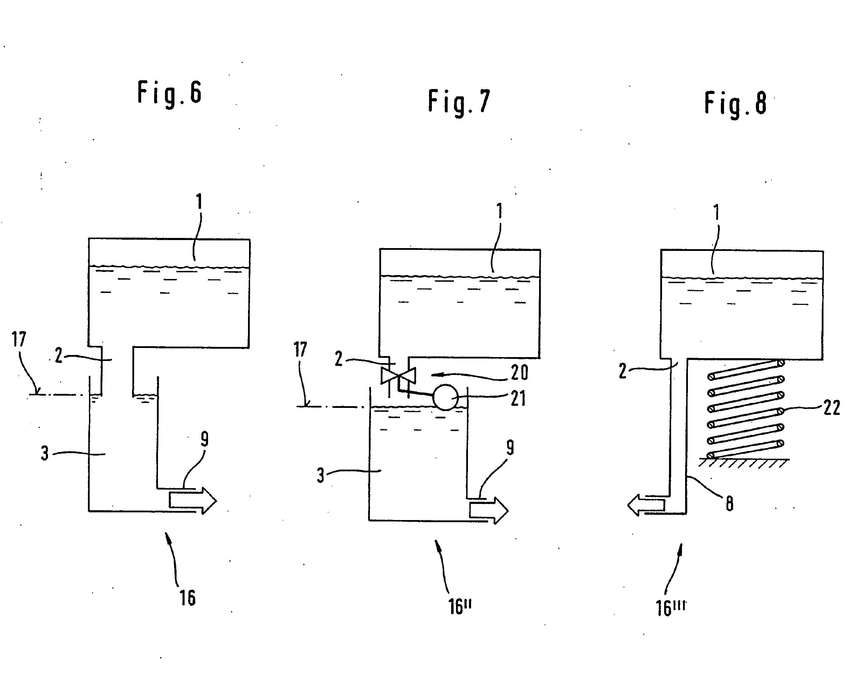

In Fig. 8 führt eine Verbindungsleitung 8 direkt zum unteren Ende eines nicht dargestellten Steigrohres 7, während in den Figuren 1 und 3 bis 7 der Bodenbereich des Behälters 3 durch eine Verbindungsleitung 9 mit dem unteren Ende eines Steigrohres 7, 7' verbunden ist.

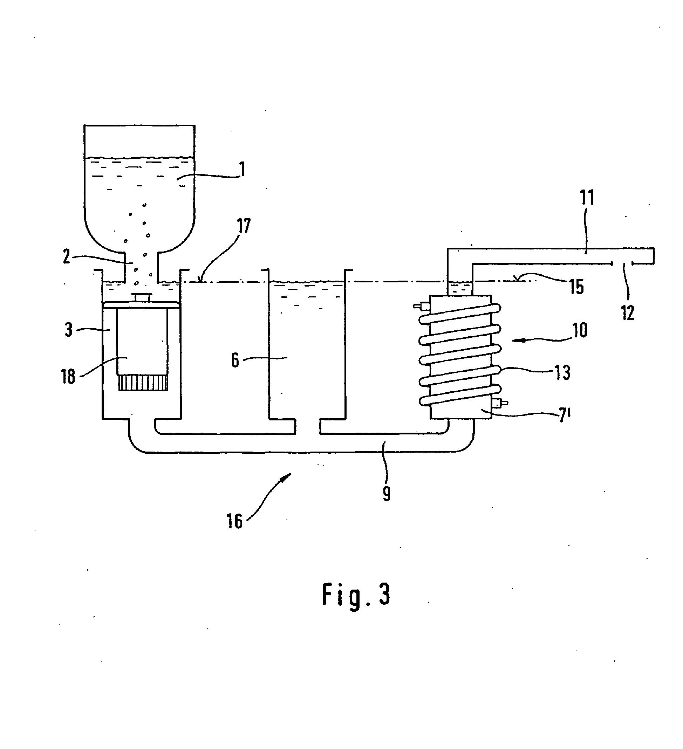

In Fig. 3 ist an die Verbindungsleitung 9 noch ein Zuführbehälter 6 an seinem Bodenbereich angeschlossen.

Wie in den Figuren 1 bis 5 zu sehen ist, ist das Steigrohr 7, 7' mit einer Heizeinrichtung 10 versehen.

Das obere Ende des Steigrohres 7 führt über einen etwa waagrechten Kanal 11 zu einem Auslaß 12, von dem durch die Heizeinrichtung aufgeheiztes Wasser oder Wasserdampf nach dem Prinzip einer Thermalpumpe in den Kanal 11 gefördert und von dort in eine nicht dargestellte Aufbrüh- oder Mischeinrichtung laufen kann. Dort erfolgt ein Aufbrühen von z.B. gemahlenem Kaffee oder ein Mischen mit einem pulverförmigen Extrakt von z.B. Kaffee, Milch oder Fleischbrühe.

Es kann aber auch nur das aufgeheizte Wasser oder der Wasserdampf in ein Gefäß geleitet werden, um z.B. Tee aufzubrühen.

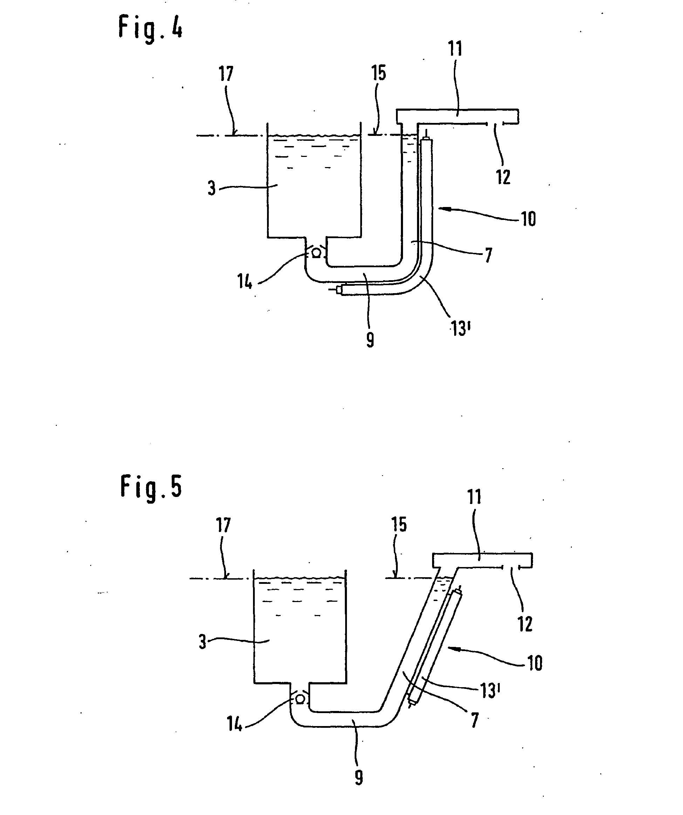

In den Figuren 1 bis 3 besteht die Heizeinrichtung 10 aus einem Heizwiderstand 13, der das Steigrohr 7, 7' gewendelt umschließt, während in den Figuren 4 und 5 die Heizeinrichtung 10 ein stabförmiger Heizwiderstand 13' ist, der sich an der Außenwand des Steigrohres 7 entlang erstreckt und im Falle der Fig. 4 sogar noch teilweise entlang der Verbindungsleitung 9 geführt ist.

Das Steigrohr 13 erstreckt sich in Fig. 4 senkrecht und in Fig. 5 unter einem Winkel geneigt nach oben.

Wie die Figuren 4 und 5 zeigen, kann im Bereich der Mündung der Verbindungsleitung 9 in den Behälter 3 ein Rückschlagventil 14 angeordnet sein, das eine Rückströmung von der Verbindungsleitung 9 in den Behälter 3 verhindert.

Zur Vergrößerung des aufheizbaren Wasservolumens ist bei den Ausführungsbeispielen der Figuren 1 bis 3 das Steigrohr 7' mit einem gegenüber der Verbindungsleitung 5, 8 oder 9 vergrößerten Durchflußquerschnitt ausgebildet.

Um eine bestimmte Wasserspiegelhöhe 15 im Steigrohr 7, 7' nahe dem Auslaß am oberen Ende des Steigrohrs 7, 7' konstant zu halten, ist eine Niveauhalteeinrichtung 16, 16', 16", 16''' vorgesehen.

Bei den Ausführungsbeispielen der Figuren 1 und 3 bis 6 ist die Niveauhalteeinrichtung 16 dadurch gebildet, daß der Behälterauslaß 2 des Wasserbehälters 1 auf einem der bestimmten Wasserspiegelhöhe 15 entsprechenden Niveau 15 senkrecht nach unten in den Behälter 3 mündet, der nach Art einer kommunizierenden Röhre über die Verbindungsleitung 9 mit dem Steigrohr 7, 7' verbunden ist. Dabei sind die Wasserspiegelhöhe 15 und das Niveau 17 immer etwa gleich. Der Wasserbehälter 1 ist bis auf seinen Behälterauslaß 2 geschlossen ausgebildet. Damit wird bei gerade eingetauchter Mündung des Wasserauslasses 2 in das Wasser des Behälters 3 durch den auf die Oberfläche des Wassers im Behälter 3 einwirkenden Atmosphärendruck ein, Nachfließen von Wasser aus dem Wasserbehälter 1 in den Behälter 3 verhindert.

Sobald eine Absenkung des Wasserstandes im Steigrohr 7, 7' durch Förderung durch den Kanal 11 zur Aufbrüh- und Mischeinrichtung erfolgt, senkt sich entsprechend auch der Wasserstand im Behälter 3 ab und gibt die Mündung des Behälterauslasses 2 frei. Dadurch läuft Wasser aus dem Wasserbehälter 1 in den Behälter 3 nach und Luft strömt von außen über den Wasserauslaß 2 in den Wasserbehälter 1, bis die Mündung des Wasserauslasses gerade wieder von dem Wasser des Behälters 3 verschlossen ist und wieder ein ausgeglichener Zustand eintritt. Dadurch wird selbsttätig die Wasserspiegelhöhe des Steigrohrs 7, 7' konstant gehalten.

Bei dem Ausführungsbeispiel der Fig. 3 ist in dem Behälter 3 noch ein Filter 18 angeordnet, der von dem vom Wasserbehälter 1 zum Steigrohr 7' fließenden Wasser durchströmt wird. Um Ungleichmäßigkeiten aufgrund der Strömungswiderstände des Filters 18 beim Nachfließen von Wasser auszugleichen, bildet das im Zuführbehälter 6 vorhandene Wasservolumen einen Puffer. Der Wasserstand im Zuführbehälter 6 entspricht immer dem Wasserstand im Steigrohr 7'. Da der Querschnitt des Zuführbehälters 6 wesentlich größer ist als der Querschnitt des Steigrohres 7', haben Schwankungen im Nachströmen von dem Behälter 3 her nur geringe Auswirkungen auf das Konstanthalten des Wasserstandes im Steigrohr 7' auf der bestimmten Wasserspiegelhöhe 15.

Bei dem Ausführungsbeispiel der Fig. 2 wird die Niveauhalteeinrichtung 16' aus dem Zuführbehälter 6' gebildet, der von der Pumpe 4 bis zu einem der bestimmten Wasserspiegelhöhe 15 im Steigrohr 7' entsprechenden Niveau 17 füllbar ist. Dazu wird die Pumpe 4 von einem Sensor 19 angesteuert, der bei Überschreiten des Niveaus 17 die Pumpe 4 abschaltet und bei Unterschreiten des Niveaus 17 die Pumpe 4 anschaltet. Damit wird der Wasserstand in dem Zuführbehälter 6' immer auf dem Niveau 17 und somit auch der Wasserstand auf der bestimmten Wasserspiegelhöhe 15 gehalten.

In Fig. 7 weist die Niveauhalteeinrichtung 16" ein Schwimmerventil 20 im Behälterauslaß 2 auf, dessen Schwimmer 21 den Wasserstand im Behälter 3 und damit auch den Wasserstand im Steigrohr erfaßt. Bei Absenkung des Wasserstandes im Behälter 3 unter ein der bestimmten Wasserspiegelhöhe im Steigrohr entsprechendes Niveau öffnet das Schwimmerventil 20, so daß durch den Behälterauslaß 2 Wasser aus dem Wasserbehälter 1 in den Behälter 3 fließen kann. Wird dann ein der bestimmten Wasserspiegelhöhe im Steigrohr entsprechendes Niveau im Behälter 3 erreicht, schließt das Schwimmerventil 20 wieder.

In Fig. 8 ist die Niveauhalteeinrichtung 16''' dadurch gebildet, daß der gesamte Wasserbehälter 1 heb- und senkbar angeordnet ist. Dazu ist der Wasserbehälter 1 auf einer Druckfeder 22 abgestützt, deren Federhub umgekehrt proportional zum Wasserstand im Wasserbehälter 1 ist. Das Füllstandsniveau im Wasserbehälter 1 befindet sich auf der bestimmten Wasserspiegelhöhe eines nicht dargestellten Steigrohres. Fließt aus dem Wasserbehälter 1 Wasser zum Steigrohr, da dieses heiße Wasser an eine Aufbrüh- oder Mischeinrichtung abgegeben wird, so erleichtert sich der Wasserbehälter 1 um das ausgeflossenen Wasservolumen. Diese Erleichterung führt gleichzeitig dazu, daß die Druckfeder 22 den Wasserbehälter 1 um das Maß anhebt, um das der Wasserstand im Wasserbehälter 1 gesunken ist, so daß das Niveau im Wasserbehälter 1 und im Steigrohr auf der bestimmten Wasserspiegelhöhe verbleibt.

## Patentansprüche

1. Gerät zur Zubereitung heißer Getränke, mit einem eine Heizeinrichtung (10) aufweisenden Steigrohr (7, 7') und einem Wasserbehälter (1), der einen Behälterauslaß (2) besitzt, aus dem über das Steigrohr (7, 7') von der Heizeinrichtung (10) aufgeheiztes Wasser oder Wasserdampf einer Aufbrüh- oder Mischeinrichtung zuführbar ist, und mit einer Niveaukonstanthalteeinrichtung (16, 16', 16", 16'''), durch welche eine oder mehrere bestimmte Wasserspiegelhöhen (15) in dem Steigrohr (7, 7') zumindest weitgehend konstant haltbar sind, wobei die Niveaukonstanthalteeinrichtung (16, 16', 16", 16''') einen Zuführbehälter (6, 6') aufweist, welcher sowohl mit dem Wasserbehälter (1) oder einem mit dem Wasserbehälter (1) verbundenen Behälter (3) als auch mit dem Steigrohr (7, 7') verbunden ist, einen dem Wasserstand des Steigrohres (7, 7') entsprechenden Wasserstand hat und bis zu einem der bestimmten Wasserspiegelhöhe (15) entsprechenden Niveau (17) füllbar ist,
**dadurch gekennzeichnet,**
**daß** der Zuführbehälter (6, 6') auf dem der bestimmten Wasserspiegelhöhe (15) im Steigrohr (7, 7') entsprechenden Niveau (17) einen Überlauf besitzt.

2. Gerät nach Anspruch 1,
**dadurch gekennzeichnet,**
**daß** eine der bestimmten Wasserspiegelhöhen (15) nahe dem Auslaß des Steigrohres (7, 7') ist.

3. Gerät nach einem der vorhergehenden Ansprüche,
**dadurch gekennzeichnet,**
**daß** der Behälter (3) zur Atmosphäre offen ist und in den Behälter (3) der Behälterauslaß (2) des geschlossenen Wasserbehälters (1) auf dem der bestimmten Wasserspiegelhöhe (15) entsprechenden Niveau (17) senkrecht nach unten mündet.

4. Gerät nach einem der Ansprüche 1 und 2,
**dadurch gekennzeichnet,**
**daß** in den Behälter (3) der Behälterauslaß (2) mündet, wobei in dem Behälterauslaß (2) ein bei Absenkung des Wasserniveaus im Steigrohr (7, 7') unter die bestimmte Wasserspiegelhöhe (15) öffnendes Auslaßventil (20) angeordnet ist.

5. Gerät nach Anspruch 4,
**dadurch gekennzeichnet,**
**daß** das Auslaßventil (20) von einem das Wasserniveau im Behälter (3) erfassenden Sensor (21) steuerbar ist.

6. Gerät nach Anspruch 5,
**dadurch gekennzeichnet,**
**daß** das Auslaßventil ein Schwimmerventil (20) und der Sensor ein Schwimmersensor (21) ist.

7. Gerät nach einem der Ansprüche 1 und 2,
**dadurch gekennzeichnet,**
**daß** die Niveaukonstanthalteeinrichtung (16''') eine Hubeinrichtung aufweist, durch die der Wasserbehälter (1) sein Wasserniveau auf der bestimmten Wasserspiegelhöhe (15) im Steigrohr (7, 7') haltend heb- und senkbar ist.

8. Gerät nach Anspruch 7,
**dadurch gekennzeichnet,**
**daß** die Hubeinrichtung eine den Wasserbehälter (1) abstützende Feder, insbesondere Druckfeder (22) ist, deren Federhub sich umgekehrt proportional zum Wasserstand im Wasserbehälter (1) verhält.

9. Gerät nach einem der Ansprüche 1 und 2,
**dadurch gekennzeichnet,**
**daß** die Niveaukonstanthalteeinrichtung (16'), insbesondere der Zuführbehälter (6'), einen die Wasserstandshöhe im Steigrohr (7') erfassenden Sensor (19) aufweist, durch den bei einem Wasserstand unter der bestimmten Wasserspiegelhöhe (15) eine in der Verbindung von dem Wasserbehälter (1) oder dem Behälter (3) angeordnete Pumpe (4) zum Steigrohr (7') fördernd einschaltbar ist.

10. Gerät nach einem der vorhergehenden Ansprüche,
**dadurch gekennzeichnet,**
**daß** das Steigrohr (7, 7') sich im Wesentlichen senkrecht ansteigend erstreckt.

11. Gerät nach einem der Ansprüche 1 bis 9,
**dadurch gekennzeichnet,**
**daß** das Steigrohr (7) sich unter einem Winkel geneigt ansteigend erstreckt.

12. Gerät nach einem der vorhergehenden Ansprüche,
**dadurch gekennzeichnet,**
**daß** die Heizeinrichtung (10) sich weitgehend über die Länge des Steigrohres (7, 7') erstreckt.

13. Gerät nach einem der vorhergehenden Ansprüche,
**dadurch gekennzeichnet,**
**daß** die Heizeinrichtung (10) sich zumindest bis nahe an den Auslaß des Steigrohres (7, 7') erstreckt.

14. Gerät nach einem der vorhergehenden Ansprüche,
**dadurch gekennzeichnet,**
**daß** die Heizeinrichtung ein sich in dem Steigrohr gerade oder gewendelt erstreckender Heizstab ist.

15. Gerät nach einem der Ansprüche 1 bis 13,
**dadurch gekennzeichnet,**
**daß** die Heizeinrichtung (10) ein sich an der Außenwand des Steigrohres (7, 7') gerade oder gewendelt erstreckender Heizstab ist.

16. Gerät nach einem der vorhergehenden Ansprüche,
**dadurch gekennzeichnet,**
**daß** die Heizeinrichtung (10) das Steigrohr (7, 7') umschließt.

17. Gerät nach einem der vorhergehenden Ansprüche,
**dadurch gekennzeichnet,**
**daß** die Heizeinrichtung (10) einen oder mehrere elektrische Heizwiderstände (13, 13') besitzt.

18. Gerät nach einem der vorhergehenden Ansprüche,
**dadurch gekennzeichnet,**
**daß** das Steigrohr ganz oder teilweise als Heizeinrichtung ausgebildet ist.

19. Gerät nach einem der vorhergehenden Ansprüche,
**dadurch gekennzeichnet,**
**daß** in dem Behälter (3) ein Filter (18) angeordnet ist, der von dem vom Wasserbehälter (1) zum Steigrohr (7') fließenden Wasser durchströmbar ist.

20. Gerät nach einem der vorhergehenden Ansprüche,
**dadurch gekennzeichnet,**
**daß** das Steigrohr (7') im Bereich der Heizeinrichtung (10) einen vergrößerten Durchflußquerschnitt besitzt.

21. Gerät nach einem der vorhergehenden Ansprüche,
**dadurch gekennzeichnet,**
**daß** von einem Sensor eine Wasserfüllung des Steigrohres zumindest im Bereich der Heizeinrichtung erfaßbar und bei nicht vorhandener Wasserfüllung ein die Heizeinrichtung abschaltendes Signal erzeugbar ist.

22. Gerät nach Anspruch 21,
**dadurch gekennzeichnet,**
**daß** der Sensor etwa im oberen Endbereich der Heizeinrichtung angeordnet ist.

23. Gerät nach einem der Ansprüche 21 und 22,
**dadurch gekennzeichnet,**
**daß** der Sensor ein Thermostat der Heizeinrichtung ist.

24. Gerät nach Anspruch 23,
**dadurch gekennzeichnet,**
**daß** der Thermostat eine Überlastsicherung besitzt.

## Claims

1. Appliance for preparing hot beverages, having a riser (7, 7') with a heating device (10), and having a water tank (1) with a tank outlet (2), from which steam or water heated up by the heating device (10) can be fed, via the riser (7, 7'), to a brewing or mixing device, and having a constant-level device (16, 16', 16'', 16''') by means of which one or more defined water-level heights (15) in the riser (7, 7') can be kept at least more or less constant, it being the case that the constant-level device (16, 16', 16'', 16''') has a feed tank (6, 6') which is connected both to the water tank (1), or a tank (3) connected to the water tank (1), and to the riser (7, 7'), has a water level corresponding to the water level of the riser (7, 7') and can be filled up to a level (17) corresponding to the defined water-level height (15), **characterized in that** the feed tank (6, 6') has an overflow at the level (17) corresponding to the defined water-level height (15) in the riser (7, 7').

2. Appliance according to Claim 1, **characterized in that** one of the defined water-level heights (15) is in the vicinity of the outlet of the riser (7, 7').

3. Appliance according to one of the preceding claims, **characterized in that** the tank (3) is open to the atmosphere, and the tank outlet (2) of the closed water tank (1) opens out vertically downwards into the tank (3) at the level (17) corresponding to the defined water-level height (15).

4. Appliance according to either of Claims 1 and 2, **characterized in that** the tank outlet (2) opens out into the tank (3), the tank outlet (2) containing an outlet valve (20) which opens when the water level in the riser (7, 7') drops below the defined-water level height (15).

5. Appliance according to Claim 4, **characterized in that** the outlet valve (20) can be controlled by a sensor (21) which senses the water level in the tank (3).

6. Appliance according to Claim 5, **characterized in that** the outlet valve is a float valve (20) and the sensor is a float sensor (21).

7. Appliance according to either of Claims 1 and 2, **characterized in that** the constant-level device (16''') has a lifting device by means of which the water tank (1) can be raised and lowered in order to keep its water level at the defined water-level height (15) in the riser (7, 7').

8. Appliance according to Claim 7, **characterized in that** the lifting device is a spring, in particular compression spring (22), which supports the water tank (1) and of which the spring displacement is inversely proportional to the water level in the water tank (1).

9. Appliance according to either of Claims 1 and 2, **characterized in that** the constant-level device (16'), in particular the feed tank (6'), has a sensor (19) which senses the water-level height in the riser (7') and by means of which, with a water level below the defined water-level height (15), a pump (4) arranged in the connection from the water tank (1) or the tank (3) can be switched on to deliver to the riser (7').

10. Appliance according to one of the preceding claims, **characterized in that** the riser (7, 7') rises up essentially vertically.

11. Appliance according to one of Claims 1 to 9, **characterized in that** the riser (7) rises up at an angle.

12. Appliance according to one of the preceding claims, **characterized in that** the heating device (10) extends largely over the length of the riser (7, 7').

13. Appliance according to one of the preceding claims, **characterized in that** the heating device (10) extends at least into the vicinity of the outlet of the riser (7, 7').

14. Appliance according to one of the preceding claims, **characterized in that** the heating device is a heating element which extends in a rectilinear or helical manner in the riser.

15. Appliance according to one of claims 1 to 13, **characterized in that** the heating device (10) is a heating element which extends in a rectilinear or helical manner on the outer wall of the riser (7, 7').

16. Appliance according to one of the preceding claims, **characterized in that** the heating device (10) encloses the riser (7, 7').

17. Appliance according to one of the preceding claims, **characterized in that** the heating device (10) has one or more electric heating resistors (13, 13').

18. Appliance according to one of the preceding claims, **characterized in that** the riser is designed wholly or partially as a heating device.

19. Appliance according to one of the preceding claims, **characterized in that** the tank (3) contains a filter (18) through which water flowing from the water tank (1) to the riser (7') can flow.

20. Appliance according to one of the preceding claims, **characterized in that** the riser (7') has an enlarged throughflow cross section in the region of the heating device (10).

21. Appliance according to one of the preceding claims, **characterized in that** a sensor can be used to sense water filling in the riser, at least in the region of the heating device, and, in the case of no water filling being present, to generate a signal which switches off the heating device.

22. Appliance according to Claim 21, **characterized in that** the sensor is arranged approximately in the top end region of the heating device.

23. Appliance according to either of Claims 21 and 22, **characterized in that** the sensor is a thermostat of the heating device.

24. Appliance according to Claim 23, **characterized in that** the thermostat has an overload-prevention means.

## Revendications

1. Appareil pour préparer des boissons chaudes, avec un tube de montée (7, 7') présentant un dispositif de chauffage (10) et avec un réservoir d'eau (1) qui possède une sortie de réservoir (2) par laquelle de l'eau ou de la vapeur d'eau chauffée via le tube de montée (7, 7') par le dispositif de chauffage (10) peut être apportée à un dispositif à infuser ou mélanger, et avec un dispositif (16, 16', 16'', 16''') pour maintenir le niveau constant, qui permet de maintenir au moins quasiment constantes une ou plusieurs hauteurs d'eau données (15) dans le tube de montée (7, 7'), sachant que le dispositif (16, 16', 16'', 16''') pour maintenir le niveau constant présente un récipient d'alimentation (6, 6') qui est relié à la fois au tube de montée (7, 7') et au réservoir d'eau (1) ou à un récipient (3) relié au réservoir d'eau (1), et qui possède un niveau d'eau correspondant au niveau d'eau du tube de montée (7, 7') et peut être rempli jusqu'à un niveau (17) correspondant à la hauteur d'eau donnée (15),
**caractérisé en ce que** le récipient d'alimentation (6, 6') possède un trop-plein au niveau (17) correspondant à la hauteur d'eau donnée (15) dans le tube de montée (7, 7').

2. Appareil selon la revendication 1, **caractérisé en ce qu'**une des hauteurs d'eau données (15) est proche de la sortie du tube de montée (7, 7').

3. Appareil selon l'une des revendications précédentes, **caractérisé en ce que** le récipient (3) est ouvert vers l'atmosphère et la sortie de réservoir (2) du réservoir d'eau fermé (1) débouche verticalement vers le bas dans le récipient (3) au niveau (17) correspondant à la hauteur d'eau donnée (15).

4. Appareil selon l'une des revendications 1 et 2, **caractérisé en ce que** la sortie de réservoir (2) débouche dans le récipient (3), sachant qu'une soupape de sortie (20), qui s'ouvre lorsque le niveau d'eau dans le tube de montée (7, 7') s'abaisse en dessous de la hauteur d'eau donnée (15), est disposée dans la sortie de réservoir (2).

5. Appareil selon la revendication 4, **caractérisé en ce que** la soupape de sortie (20) peut être commandée par un capteur (21) détectant le niveau d'eau dans le récipient (3).

6. Appareil selon la revendication 5, **caractérisé en ce que** la soupape de sortie est une soupape à flotteur (20) et le capteur est un capteur à flotteur (21).

7. Appareil selon l'une des revendications 1 et 2, **caractérisé en ce que** le dispositif (16''') pour maintenir le niveau constant présente un dispositif de levage par lequel le réservoir d'eau (1) peut être relevé et abaissé en maintenant son niveau d'eau à la hauteur d'eau donnée (15) dans le tube de montée (7, 7').

8. Appareil selon la revendication 7, **caractérisé en ce que** le dispositif de levage est un ressort soutenant le réservoir d'eau (1), en particulier un ressort de compression (22), dont la course de ressort se comporte de façon inversement proportionnelle au niveau d'eau dans le réservoir d'eau (1).

9. Appareil selon l'une des revendications 1 et 2, **caractérisé en ce que** le dispositif (16') pour maintenir le niveau constant, en particulier le récipient d'alimentation (6'), présente un capteur (19) détectant le niveau d'eau dans le tube de montée (7') et permettant, lorsque le niveau d'eau est inférieur à la hauteur d'eau donnée (15), d'activer une pompe (4), disposée dans la liaison en provenance du réservoir d'eau (1) ou du récipient (3), afin de refouler l'eau vers le tube de montée (7').

10. Appareil selon l'une quelconque des revendications précédentes, **caractérisé en ce que** le tube de montée (7, 7') s'étend selon une pente ascendante essentiellement verticale.

11. Appareil selon l'une quelconque des revendications 1 à 9, **caractérisé en ce que** le tube de montée (7) s'étend selon une pente ascendante inclinée sous un angle.

12. Appareil selon l'une quelconque des revendications précédentes, **caractérisé en ce que** le dispositif de chauffage (10) s'étend quasiment sur toute la longueur du tube de montée (7, 7').

13. Appareil selon l'une quelconque des revendications précédentes, **caractérisé en ce que** le dispositif de chauffage (10) s'étend au moins jusque près de la sortie du tube due montée (7, 7').

14. Appareil selon l'une quelconque des revendications précédentes, **caractérisé en ce que** le dispositif de chauffage est un barreau chauffant s'étendant en ligne droite ou en hélice dans le tube de montée.

15. Appareil selon l'une quelconque des revendications 1 à 13, **caractérisé en ce que** le dispositif de chauffage (10) est un barreau chauffant s'étendant en ligne droite ou en hélice sur la paroi extérieure du tube de montée (7, 7').

16. Appareil selon l'une quelconque des revendications précédentes, **caractérisé en ce que** le dispositif de chauffage (10) entoure le tube de montée (7, 7').

17. Appareil selon l'une quelconque des revendications précédentes, **caractérisé en ce que** le dispositif de chauffage (10) possède une ou plusieurs résistances chauffantes électriques (13, 13').

18. Appareil selon l'une quelconque des revendications précédentes, **caractérisé en ce que** le tube de montée est conçu en totalité ou en partie comme dispositif de chauffage.

19. Appareil selon l'une quelconque des revendications précédentes, **caractérisé en ce qu'**un filtre (18) est disposé dans le récipient (3), l'eau s'écoulant du réservoir d'eau (1) au tube de montée (7') pouvant s'écouler à travers ce filtre.

20. Appareil selon l'une quelconque des revendications précédentes, **caractérisé en ce que** le tube de montée (7') possède une section de passage agrandie dans la région du dispositif de chauffage (10).

21. Appareil selon l'une quelconque des revendications précédentes, **caractérisé en ce qu'**un détecteur peut détecter un remplissage d'eau du tube de montée au moins dans la région du dispositif de chauffage, et un signal désactivant le dispositif de chauffage peut être produit en l'absence de remplissage d'eau.

22. Appareil selon la revendication 21, **caractérisé en ce que** le capteur est disposé environ dans la région terminale supérieure du dispositif de chauffage.

23. Appareil selon l'une des revendications 21 et 22, **caractérisé en ce que** le capteur est un thermostat du dispositif de chauffage.

24. Appareil selon la revendication 23, **caractérisé en ce que** le thermostat possède une sécurité contre les surcharges.
